# EUROPEAN PATENT APPLICATION

(11) **EP 4 360 828 A1**
(43) Date of publication of application: **01.05.2024**
(21) Application number: 23197997.2
(22) Date of filing: 18.09.2023
(51) Int. Cl.: B25J 15/00, B25J 15/06

(54) **LOGISTICS ROBOTIC SYSTEM WITH ADJUSTABLE MULTI-ZONE END EFFECTOR**

(30) Priority: 25.10.2022 US 202218049575
(71) Applicant: Intelligrated Headquarters LLC, Mason, OH 45040 (US)
(72) Inventor: REST, Adam Ming, Charlotte, 28202 (US)
(74) Representative: Haseltine Lake Kempner LLP

(57) **Abstract**

Various embodiments are directed to a robotic system using an end effector configured for handling one or more objects within a handling environment. In various embodiments, the end effector comprises a frame element secured relative to the positioning mechanism; and a plurality of engagement pads operably coupled to the frame element, each of the plurality of engagement pads being moveable in one or more directions relative to the frame element by a corresponding actuation assembly; wherein each of the corresponding actuation assemblies is independently operable to move one of the plurality of engagement pads connected thereto throughout a respective range of motion such that each of the plurality of engagement pads is configured to engage a respective portion of the one or more objects.

## Description

### FIELD OF THE INVENTION

Example embodiments of the present invention relate generally to a materials handling system configured for loading and unloading objects, and more specifically, to a robotic system having an adjustable end effector configured to facilitate execution of one or more handling operations corresponding to at least one object(s) that disposed within a plurality of handling zones defined by the independently controllable engagement assemblies of the end effector.

### BACKGROUND

The present disclosure relates in general to a robotic system for handling objects and is more particularly directed to an end effector comprising one or more independently controllable engagement assemblies configured for loading and unloading objects within a plurality of handling zones. Containers loaded with a plurality of objects are transported to deliver products to loading and unloading warehouse. End effectors operably connected to robotic systems have been used for loading and unloading. However, these alternative end effectors are plagued by technical challenges and limitations. Through applied effort, ingenuity, and innovation, many of these identified problems have been solved by developing solutions that are included in embodiments of the present disclosure, many examples of which are described in detail herein.

### BRIEF SUMMARY

Various embodiments described herein relate to methods, apparatuses, and systems for operating logistic robotic systems. In various embodiments, an end effector configured for handling one or more objects within a handling environment may comprise a frame element secured relative to the positioning mechanism; and a plurality of engagement pads operably coupled to the frame element, each of the plurality of engagement pads being moveable in one or more directions relative to the frame element by a corresponding actuation assembly; wherein each of the corresponding actuation assemblies is independently operable to move one of the plurality of engagement pads connected thereto throughout a respective range of motion such that each of the plurality of engagement pads is configured to engage a respective portion of the one or more objects.

In various embodiments, each of the plurality of engagement pads may be configured for movement in a first direction defined along a first axis and a second direction defined along a second axis. In certain embodiments, a first movement of a first engagement pad in the first direction may define a height adjustment and a second movement of the first engagement pad in the second direction defines a depth adjustment. In various embodiments, one or more of the plurality of engagement pads may comprise a vacuum pad defined by one or more suction elements positioned within the engagement pad. In various embodiments, the plurality of engagement pads may comprise a first engagement pad connected to a first actuation assembly, a second engagement pad connected to a second actuation assembly, and a third engagement pad connected to a third actuation assembly, the first engagement pad being independently moveable throughout a first range of motion by the first actuation assembly, the second engagement pad being independently moveable throughout a second range of motion by the second actuation assembly, and the third engagement pad being independently moveable throughout a third range of motion by the third actuation assembly. In certain embodiments, the first engagement pad may define a first individual zone.

In various embodiments, the end effector may be operable to engage the one or more objects within a plurality of distinct handling zones, the plurality of handling zones being defined by the plurality of engagement pads such that each of the plurality of engagement pads is configured to engage a respective portion of the one or more objects defined within a corresponding handling zone, wherein each of the plurality of handling zones is defined at least in part by the respective range of motion of one of the plurality of engagement pads. In certain embodiments, each of the plurality of handling zones may be defined by a respective zone width that corresponds to a pad width of the respective engagement pad defining the handling zone. In various embodiments, the end effector may further comprise one or more support element configured to contact at least a portion of the one or more objects to support the one or more objects in an engaged position relative to the plurality of engagement pads. In certain embodiments, the one or more support elements may comprise a plurality of support elements, each of the plurality of support elements being positioned relative to a respective one of the plurality of engagement pads. In certain embodiments, the one or more support element may be secured relative to the frame element in a position below at least a portion of the plurality of engagement pads.

In various embodiments, the plurality of engagement pads may be distributed along a width of the end effector in a lateral arrangement such that each of the plurality of engagement pads is positioned at a respective position defined along the width. In various embodiments, at least a portion of each of the plurality of engagement pads may be made of a compliant material. In various embodiments, each of the corresponding actuation assemblies may comprise an electric guided actuator. In certain embodiments, each of the corresponding actuation assemblies may comprise a first actuator element configured to move one or more of the plurality of engagement pads in a first direction relative to the frame assembly and a second actuator element configured to move one or more of the plurality of engagement pads in a first direction relative to the frame assembly. In various embodiments, each of the corresponding actuation assemblies may be communicatively connected with a controller such that each actuation assembly is independently operable based on one or more control signals received from the controller. In various embodiments, the end effector may further comprise one or more lighting element configured to selectively illuminate at least a portion of the handling environment.

Various embodiments are directed to a robotic system for handling one or more objects within a handling environment. In various embodiments, the robotic system may comprise a positioning mechanism configured for movement relative to the one or more objects within the handling environment; and an end effector operably coupled to the positioning mechanism and configured for engagement with the one or more objects, the end effector comprising: a frame element secured relative to the positioning mechanism; and a plurality of engagement pads operably coupled to the frame element, each of the plurality of engagement pads being moveable in one or more directions relative to the frame element by a corresponding actuation assembly; wherein each of the corresponding actuation assemblies is independently operable to move one of the plurality of engagement pads connected thereto throughout a respective range of motion such that each of the plurality of engagement pads is configured to engage a respective portion of the one or more objects.

In various embodiments, the system may further comprise one or more image sensing component, the one or more image sensing component comprising one or more of image sensors operable to generate object data associated with the one or more objects provided within the handling environment, wherein the object data is indicative of one or more of an object position, an object size, and an object shape defined by at least a portion of the one or more objects. In various embodiments, the system may further comprise a controller communicatively coupled to each of the actuation assemblies and configured to control the plurality of engagement pads by independently moving one or more of the engagement pads to within the respective range of motion based on the object data.

The foregoing illustrative summary, as well as other exemplary objectives and/or advantages of the disclosure, and the manner in which the same are accomplished, are further explained in the following detailed description and its accompanying drawings.

### BRIEF DESCRIPTION OF THE DRAWINGS

The description of the illustrative embodiments can be read in conjunction with the accompanying figures. It will be appreciated that, for simplicity and clarity of illustration, elements illustrated in the figures have not necessarily been drawn to scale, unless described otherwise. For example, the dimensions of some of the elements can be exaggerated relative to other elements, unless described otherwise. At times, like reference numeral are used across multiple figures. These like reference numerals refer to like parts throughout the multiple figures unless otherwise specified. Embodiments incorporating teachings of the present disclosure are shown and described with respect to the figures presented herein, in which:
FIG. 1 illustrates an example of a system in accordance with various embodiments of the present disclosure;
FIG. 2 illustrates an exemplary side perspective view of a robotic unloader in accordance with various embodiments of the present disclosure;
FIGS. 3A and 3B illustrate perspective views of an exemplary end effector in accordance with various embodiments of the present disclosure;
FIGS. 4A and 4B illustrate perspective views of an exemplary end effector in accordance with various embodiments of the present disclosure;
FIGS. 5A and 5B illustrate top views of an exemplary end effector in accordance with various embodiments of the present disclosure;
FIGS. 6A-6D illustrate various views of an exemplary end effector in a handling environment in accordance with various embodiments of the present disclosure; and
FIG. 7 illustrates an example controller component in electronic communication with various other components of an example robotic system in accordance with various embodiments of the present disclosure.

### DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures can be embodied in many different forms and should not be construed as limited to the embodiments set forth herein; rather, these embodiments are provided so that this disclosure will satisfy applicable legal requirements. Like numbers refer to like elements throughout.

The components illustrated in the figures represent components that can or cannot be present in various embodiments of the present disclosure described herein such that embodiments can include fewer or more components than those shown in the figures while not departing from the scope of the present disclosure. Some components can be omitted from one or more figures or shown in dashed line for visibility of the underlying components.

The phrases "in an example embodiment," "some embodiments," "various embodiments," and the like generally mean that the particular feature, structure, or characteristic following the phrase can be included in at least one embodiment of the present disclosure, and can be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other embodiments.

If the specification states a component or feature "can," "could," "should," "would," "preferably," "possibly," "typically," "optionally," "for example," "often," or "might" (or other such language) be included or have a characteristic, that a specific component or feature is not required to be included or to have the characteristic. Such components or features can be optionally included in some embodiments or can be excluded.

The term "electronically coupled" or "in electronic communication with" in the present disclosure can refer to two or more electrical elements (for example, but not limited to, an example processing circuitry, communication element, input/output module memory) and/or electric circuit(s) being connected through wired means (for example but not limited to, conductive wires, system bus, wired Ethernet connection or traces) and/or wireless means (for example but not limited to, wireless network, electromagnetic field, Wi-Fi, Bluetooth, Zigbee), such that data and/or information (for example, electronic indications, signals) can be transmitted to and/or received from the electrical elements and/or electric circuit(s) that are electronically coupled.

Automated robotic systems configured with an end effector can be utilized in a material handling setting to unload/or load objects from and/or to containers. A contained, for example, can include a tractor container, a sea bound container, or any other shipping container that can hold a plurality of objects for transport and/or storage. Current end effectors offer several disadvantages in terms of adjustability and throughput which results in inefficiencies and inaccuracies for the end effector engaging with objects. For example, end effectors can be designed for loading and unloading structured objects (e.g., a plurality of objects arranged in a particular manner and/or no abnormalities to the packaging like dents), which reduces the ability of the end effector for one or more unstructured objects such as for example, when one or more objects contains a dent in the packaging. Moreover, the ability to unload objects can degrade depending on the size, dimensions, and arrangement of objects to be handled. In some cases, objects can shift during transit resulting in one or more structured objects to become unstructured. This causes the end effector to be limited on the number of digress it can be adjusted in order to adjust for the one or more unstructured object. An end effector that is capable of adjusting independent zones for handling objects of various dimensions and arranged in unstructured formats is therefore advantageous.

In accordance with various embodiments of the present disclosure, example methods, apparatuses, computer program products and systems are provided that, in some examples provide an end effector for handling objects within containers. The end effector can include two or more individualized zones that can adjust in a plurality of directions independent of one another to handle individual objects in various structured and/or unstructured arrangements.

For example, the present disclosure provides an end effector including two or more engagement assembly, two or more adjustable engagement pads, a frame assembly, and one or more actuation assemblies. The two or more engagement assemblies are couple to the frame assembly. The two or more engagement pads is operably coupled to the two or more engagement assemblies by one or more actuation assemblies configured to move the two or more engagement pads in a plurality of directions independently from one another relative to the frame assembly. For example, a first engagement pad may be configured to move to the maximum distance in a first direction relative to the frame assembly, and a second engagement pad may be configured to move to the maximum distance in a second direction relative to the frame assembly, wherein the second direction may be, at least in part, orthogonal to the first direction relative to the frame assembly.

As such, the present disclosure provides an end effector having two or more independently adjustable engagement pads with respect to the frame assembly. The one or more actuator assemblies may be configured to translate the one or more engagement pads in a plurality of direction relative to the frame assembly. The frame assembly can be configured to be operably fixed to one or more robotic systems. In this manner, the end effector can efficiently adjust and adapt to one or more unstructured object to engage with the object more securely to increase the efficiency of the end effector.

Moreover, by having two or more independently adjustable engagement pads, the end effector can accommodate for a plurality of non-structed objects on a single row. The two or more independently adjustable engagement pads provide the end effector with more than two degrees of freedom. Furthermore, the end effector can be operably coupled to a robotic system can be used to automatically unload objects with the assistance of a vision system defined by one or more image sensing component.

In this manner, the end effector described herein provides a practical improvement over conventional end effectors that leads to increase adjustability, reliability, adaptability and control for loading and/or unloading objects while decreasing inefficiencies and inaccuracies.

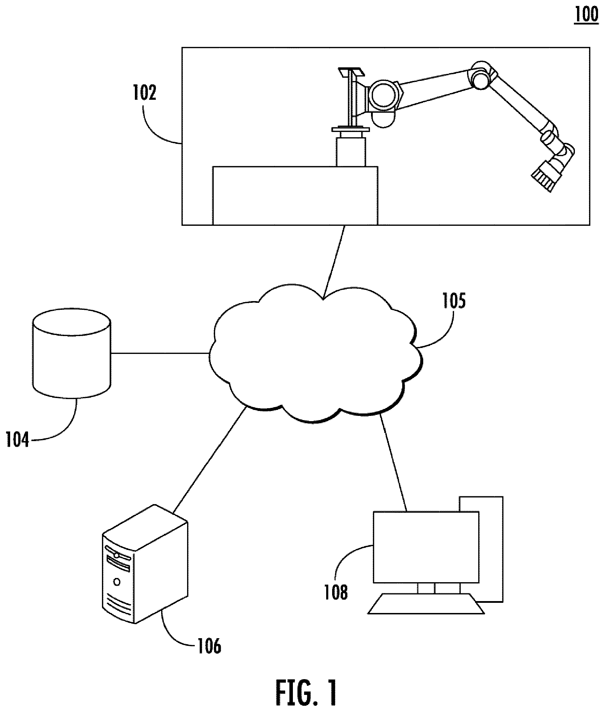

FIG. 1, a schematic diagram depicting an example materials handling system 100 in accordance various embodiments of the present disclosure is provided. As depicted, the example materials handling system 100 includes a robotic system 102, one or more computing entities 106 (e.g., servers), one or more databases 104, one or more networks 105, one or more user computing entities 108, and/or the like. In various examples, the materials handling system 100 can operate to handle objects within a handling environment defined by a logistic facility. For example, as described herein, the robotic system 102 can be configured to handle objects within a particular location or environment utilizing one or more robotic manipulators, end effectors, conveyor systems, and/or other robotic components of the robotic system 102, as described herein.

The robotic system 102, the one or more computing entities 106, the one or more databases 104 and/or the one or more user computing entities 108 can be in electronic communication with each other over the one or more networks 105 such that they can exchange data (e.g., receive and transmit data) with one another (e.g., periodically and/or in response to requests). Each of the components of the materials handling system 100 can be in communication with one another over the same or different wireless or wired networks 105 including, for example, a wired or wireless Personal Area Network (PAN), Local Area Network (LAN), Metropolitan Area Network (MAN), Wide Area Network (WAN), cellular network, and/or the like. While FIG. 1 illustrates certain system components as separate, standalone devices, the various embodiments are not limited to this particular architecture.

As depicted in FIG. 1, the example materials handling system 100 includes one or more computing entities 106. In general, the terms computing device, entity, device, system, and/or similar words used herein interchangeably can refer to, for example, one or more computers, computing devices, computing entities, desktop computers, mobile phones, tablets, phablets, notebooks, laptops, distributed systems, terminals, servers or server networks, blades, gateways, switches, processing devices, set-top boxes, relays, routers, network access points, base stations, the like, and/or any combination of devices adapted to perform the functions, operations, and/or processes described herein. Such functions, operations, and/or processes can include, for example, transmitting, receiving, operating on, processing, displaying, storing, determining, generating/creating, monitoring, evaluating, comparing, and/or similar terms used herein interchangeably. In one embodiment, these functions, operations, and/or processes can be performed on data, content, information, and/or similar terms used herein interchangeably.

In some examples, the computing entity 106 can also include one or more network and/or communications interfaces for communicating with various computing entities, such as by communicating data, content, information, and/or similar terms used herein interchangeably that can be transmitted, received, operated on, processed, displayed, stored, and/or the like.

In one embodiment, the computing entity 106 can further include or be in communication with non-volatile media (also referred to as non-volatile storage, memory, memory storage, memory circuitry and/or similar terms used herein interchangeably). In one embodiment, the non-volatile storage or memory can include one or more non-volatile storage or memory media as described above, such as hard disks, ROM, PROM, EPROM, EEPROM, flash memory, MMCs, SD memory cards, Memory Sticks, CBRAM, PRAM, FeRAM, RRAM, SONOS, racetrack memory, and/or the like. As will be recognized, the non-volatile storage or memory media can store databases, database instances, database management system entities, data, applications, programs, program modules, scripts, source code, object code, byte code, compiled code, interpreted code, machine code, executable instructions, and/or the like. The term database, database instance, database management system entity, and/or similar terms used herein interchangeably can refer to a structured collection of records or information/data that is stored in a computer-readable storage medium, such as via a relational database, hierarchical database, and/or network database.

In one embodiment, the computing entity 106 can further include or be in communication with volatile media (also referred to as volatile storage, memory, memory storage, memory circuitry and/or similar terms used herein interchangeably). In one embodiment, the volatile storage or memory can also include one or more volatile storage or memory media as described above, such as RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. As will be recognized, the volatile storage or memory media can be used to store at least portions of the databases, database instances, database management system entities, data, applications, programs, program modules, scripts, source code, object code, byte code, compiled code, interpreted code, machine code, executable instructions, and/or the like being executed by, for example, the processing element. Thus, the databases, database instances, database management system entities, data, applications, programs, program modules, scripts, source code, object code, byte code, compiled code, interpreted code, machine code, executable instructions, and/or the like can be used to control certain aspects of the operation of the computing entity 106 with the assistance of the processing element and the operating system.

As indicated, in one embodiment, the computing entity 106 can also include one or more network and/or communications interfaces for communicating with various computing entities, such as by communicating data, content, information, and/or similar terms used herein interchangeably that can be transmitted, received, operated on, processed, displayed, stored, and/or the like. Such communication can be executed using a wired data transmission protocol, such as fiber distributed data interface (FDDI), digital subscriber line (DSL), Ethernet, asynchronous transfer mode (ATM), frame relay, data over cable service interface specification (DOCSIS), or any other wired transmission protocol. Similarly, computing entity 106 can be configured to communicate via wireless external communication networks using any of a variety of protocols, such as embedded sim (eSIM), remote sim provisioning (RSP), general packet radio service (GPRS), Universal Mobile Telecommunications System (UMTS), Code Division Multiple Access 200 (CDMA200), CDMA200 1X (1xRTT), Wideband Code Division Multiple Access (WCDMA), Global System for Mobile Communications (GSM), Enhanced Data rates for GSM Evolution (EDGE), Time Division-Synchronous Code Division Multiple Access (TD-SCDMA), Long Term Evolution (LTE), Evolved Universal Terrestrial Radio Access Network (E-UTRAN), Evolution-Data Optimized (EVDO), High Speed Packet Access (HSPA), HighSpeed Downlink Packet Access (HSDPA), IEEE 802.11 (Wi-Fi), Wi-Fi Direct, 802.16 (WiMAX), ultra-wideband (UWB), IR protocols, NFC protocols, RFID protocols, IR protocols, ZigBee protocols, Z-Wave protocols, 6LoWPAN protocols, Wibree, Bluetooth protocols, wireless universal serial bus (USB) protocols, and/or any other wireless protocol. The computing entity 106 can use such protocols and standards to communicate using Border Gateway Protocol (BGP), Dynamic Host Configuration Protocol (DHCP), Domain Name System (DNS), File Transfer Protocol (FTP), Hypertext Transfer Protocol (HTTP), HTTP over TLS/SSL/Secure, Internet Message Access Protocol (IMAP), Network Time Protocol (NTP), Simple Mail Transfer Protocol (SMTP), Telnet, Transport Layer Security (TLS), Secure Sockets Layer (SSL), Internet Protocol (IP), Transmission Control Protocol (TCP), User Datagram Protocol (UDP), Datagram Congestion Control Protocol (DCCP), Stream Control Transmission Protocol (SCTP), HyperText Markup Language (HTML), and/or the like.

As will be appreciated, one or more of the computing entity's 106 components can be located remotely from other computing entity 106 components, such as in a distributed system. Furthermore, one or more of the components can be aggregated and additional components performing functions described herein can be included in the computing entity 106. Thus, the computing entity 106 can be adapted to accommodate a variety of needs and circumstances, such as including various components described with regard to a mobile application executing on the user computing entity 108, including various input/output interfaces.

As depicted in FIG. 1, the materials handling system 100 includes a user computing entity 108. In various embodiments, the user computing entity 108 can be or include one or more mobile devices, wearable computing devices, and/or the like. An example user computing entity 108 can include an antenna, a transmitter (e.g., radio), a receiver (e.g., radio), and a processing element that provides signals to and receives signals from the transmitter and receiver, respectively. The signals provided to and received from the transmitter and the receiver, respectively, can include signaling information/data in accordance with an air interface standard of applicable wireless systems to communicate with various devices, such as a computing entity (e.g., central server), another user computing entity 108, and/or the like. In an example embodiment, the transmitter and/or receiver are configured to communicate via one or more SRC protocols. For example, the transmitter and/or receiver can be configured to transmit and/or receive information/data, transmissions, and/or the like of at least one of Bluetooth protocols, low energy Bluetooth protocols, NFC protocols, RFID protocols, IR protocols, Wi-Fi protocols, ZigBee protocols, Z-Wave protocols, 6LoWPAN protocols, and/or other short range communication protocol. In various embodiments, the antenna, transmitter, and receiver can be configured to communicate via one or more long range protocols, such as GPRS, UMTS, CDMA200, 1xRTT, WCDMA, GSM, EDGE, TD-SCDMA, LTE, E-UTRAN, EVDO, HSPA, HSDPA, Wi-Fi, Wi-Fi Direct, WiMAX, and/or the like. The user computing entity 108 can also include one or more network and/or communications interfaces for communicating with various computing entities, such as by communicating data, content, information, and/or similar terms used herein interchangeably that can be transmitted, received, operated on, processed, displayed, stored, and/or the like. In this regard, the user computing entity 108 can be capable of operating with one or more air interface standards, communication protocols, modulation types, and access types. More particularly, the user computing entity 108 can operate in accordance with any of a number of wireless communication standards and protocols. In a particular embodiment, the user computing entity 108 can operate in accordance with multiple wireless communication standards and protocols, such as GPRS, UMTS, CDMA200, 1xRTT, WCDMA, TD-SCDMA, LTE, E-UTRAN, EVDO, HSPA, HSDPA, Wi-Fi, WiMAX, UWB, IR protocols, Bluetooth protocols, USB protocols, and/or any other wireless protocol.

Via these communication standards and protocols, the user computing entity 108 can communicate with various other devices using concepts such as Unstructured Supplementary Service information/data (USSD), Short Message Service (SMS), Multimedia Messaging Service (MMS), Dual-Tone Multi-Frequency Signaling (DTMF), and/or Subscriber Identity Module Dialer (SIM dialer). The user computing entity 108 can also download changes, add-ons, and updates, for instance, to its firmware, software (e.g., including executable instructions, applications, program modules), and operating system.

According to one embodiment, the user computing entity 108 can include location determining aspects, devices, modules, functionalities, and/or similar words used herein interchangeably to acquire location information/data regularly, continuously, or in response to certain triggers.

The user computing entity 108 can include a user interface device comprising one or more user input/output interfaces (e.g., a display and/or speaker/speaker driver coupled to a processing element and a touch interface, keyboard, mouse, and/or microphone coupled to a processing element). For example, the user interface can be configured to provide a mobile application, browser, interactive user interface, dashboard, webpage, and/or similar words used herein interchangeably executing on and/or accessible via the user computing entity 108 to cause display or audible presentation of information/data and for user interaction therewith via one or more user input interfaces. Moreover, the user interface can include or be in communication with any of a number of devices allowing the user computing entity 108 to receive information/data, such as a keypad (hard or soft), a touch display, voice/speech or motion interfaces, scanners, readers, or other input device. In embodiments including a keypad, the keypad can include (or cause display of) the conventional numeric (0-9) and related keys (#, *), and other keys used for operating the user computing entity 108 and can include a full set of alphabetic keys or set of keys that can be activated to provide a full set of alphanumeric keys. In addition to providing input, the user input interface can be used, for example, to activate or deactivate certain functions, such as screen savers and/or sleep modes. Through such inputs the user computing entity 108 can capture, collect, store information/data, user interaction/input, and/or the like.

The user computing entity 108 can also include volatile storage or memory and/or non-volatile storage or memory, which can be embedded and/or can be removable. For example, the non-volatile memory can be ROM, PROM, EPROM, EEPROM, flash memory, MMCs, SD memory cards, Memory Sticks, CBRAM, PRAM, FeRAM, RRAM, SONOS, racetrack memory, and/or the like. The volatile memory can be RAM, DRAM, SRAM, FPM DRAM, EDO DRAM, SDRAM, DDR SDRAM, DDR2 SDRAM, DDR3 SDRAM, RDRAM, RIMM, DIMM, SIMM, VRAM, cache memory, register memory, and/or the like. The volatile and non-volatile storage or memory can store databases, database instances, database management system entities, information/data, applications, programs, program modules, scripts, source code, object code, byte code, compiled code, interpreted code, machine code, executable instructions, and/or the like to implement the functions of the user computing entity 108.

As depicted in FIG. 1, any two or more of the illustrative components of the materials handling system 100 of FIG. 1 can be configured to communicate with one another via one or more networks 105. The networks 105 can include, but are not limited to, any one or a combination of different types of suitable communications networks such as, for example, cable networks, public networks (e.g., the Internet), private networks (e.g., frame-relay networks), wireless networks, cellular networks, telephone networks (e.g., a public switched telephone network), or any other suitable private and/or public networks. Further, the networks 105 can have any suitable communication range associated therewith and can include, for example, global networks (e.g., the Internet), MANs, WANs, LANs, or PANs. In addition, the networks 105 can include any type of medium over which network traffic can be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof, as well as a variety of network devices and computing platforms provided by network providers or other entities.

While FIG. 1 provides an example materials handling system 100, it is noted that the scope of the present disclosure is not limited to the example shown in FIG. 1. In some examples, the materials handling system 100 can include one or more additional and/or alternative elements, and/or can be different from that illustrated in FIG. 1.

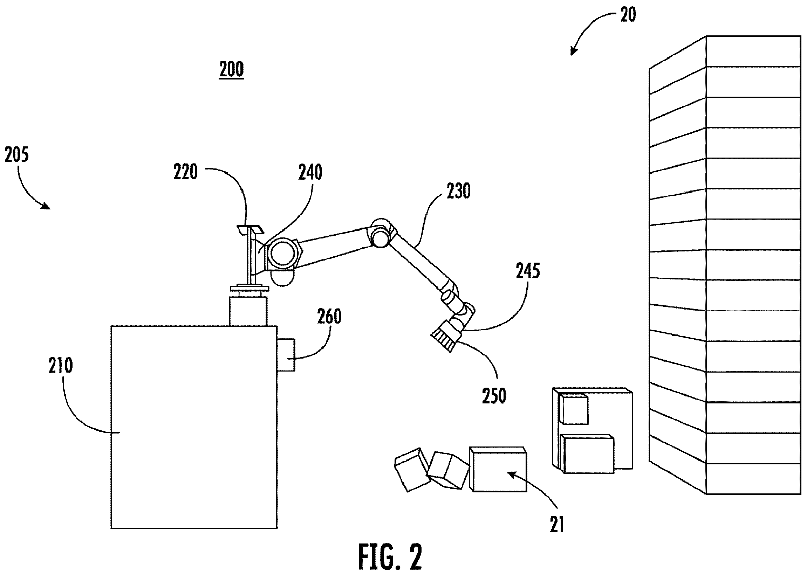

FIG. 2 illustrates an exemplary side perspective view 200 of a robotic system 205 in accordance with various embodiments of the present disclosure. The robotic system 205 can include a base 210, a mount element 220 coupled to the base 210, a robotic manipulator 230 mounted at a proximal end to the mount element 220, and an end effector 250 disposed at the distal end of the robotic manipulator 230. The robotic system 205 can be configured to move one or more objects 21 disposed within a handling environment 20 from one location (e.g., a logistics container, pallet, etc.) to another location in a controlled manner. In some embodiments, by way of example, the robotic manipulator can be configured to load and/or unload one or more of the objects 21 within a handling environment 20 by engaging the one or more objects with an end effector 250 having one or more independently operable engagement assemblies to facilitate the engagement of the end effector with a corresponding plurality of objects 21. As described herein, the independently operable component of an end effector 250 defined by the robotic system 205 can improve the flexibility of the end effector and/or the robotic system during execution of one or more retrieval operations.

An exemplary robotic manipulator 230 can have a first end 240 and a second end 245 that is opposite to the first end 240. The robotic manipulator 230 can be mounted to the vertical mount 220 at the first end 240 and the second end 245 can include an end effector 250.

A robotic manipulator 230 can include a robotic arm. The robotic arm can include any robotic arm design such as, for example, a cartesian robotic arm, a cylindrical robotic arm, polar/spherical robotic arm, pneumatic robotic arm, and/or the like. As one example, the robotic manipulator 230 can include a six degrees of freedom robotic arm. In addition, or alternatively, the robotic manipulator 230 can include a cartesian robotic arm and/or pneumatic robotic arm. In some embodiments, the robotic manipulator 230 can be removably mounted to the vertical mount 220 and can be reconfigured based on one or more load characteristics (e.g., object characteristics, dimensions, arrangements, fragility, etc.) associated with a loading and/or unloading activity.

The end effector 250 can include any gripping mechanism operable to grasp, draw, drag, and/or otherwise move an object. As one example, the end effector 250 can include one or more vacuum effectors. In addition, or alternatively, the end effector 250 can include mechanical grippers, pneumatic grippers, and/or any other robotic gripping mechanism. In some embodiments, the end effector 250 can be removably coupled to the arm of the robotic manipulator 230 and can be reconfigured based on one or more load characteristics associated with a loading and/or unloading activity.

The robotic system 205 can include one or more image sensing component (not shown) configured to capture sensor data indicative of the robotic system's environment The one or more image sensing component can include one or more image sensors (e.g., depth, color (e.g., RGB), and other spectrum sensors) for recording sensor data indicative of respective area proximate to the robotic system. By way of example, the sensor data can include environmental data representative of a current (or past) state for each of the handling zones. The container data can be utilized by the robotic system 205 to identify objects within a handling zone and/or automatically actuate a robotic manipulator and/or one of the plurality of engagement assemblies defined by an end effector 250, as described herein, for handling objects within each of the engagement assembly's respective handling zone.

The robotic system 205 can identify objects for handling (e.g., queued objects) using sensor data indicative of the handling environment of the robotic system 205 such as, for example, an interior of a logistics container. For instance, as described herein, the robotic system 205 can include one or more image sensing component. The one or more image sensing component can include one or more image sensors operable to generate sensor data indicative of the surrounding environment of the robotic system 205. The image sensors 260 can include one or more image sensing component(s), such as, for example, camera(s) such as RGB cameras, two dimensional (2D) and/or three dimensional (3D) light detection and ranging (LiDAR) sensor(s), long, medium, and/or short range radio detection and ranging (RADAR) sensor(s), (near-) infrared (IR) cameras, 3D cameras, 360° cameras, and/or other sensors capable of recording attributes of a handling environment, or any combination thereof. The handling environment can include an area toward the front section of the robotic system. For instance, the robotic system 205 can face the handling environment, such as, for example an interior of the logistics container. In various embodiments, the sensor data can include environmental data indicative of one or more environment characteristics defined by the handling environment, such as, for example an interior of the logistics container. Further, in various embodiments, the sensor data can include object data indicative of one or more objects characteristics defined by one or more of the objects disposed within the handling environment, such as, for example an object position, an object shape, an object size, and/or object distribution within the handling environment.

As described in further detail herein, the one or more image sensing component of the robotic system 205 can be configured to capture container data for each of a plurality of handling zones defined within the handling environment. For example, the one or more image sensing component can include one or more image sensors configured to capture each segment from one or a plurality of different viewing angles. In some embodiments, a number, and a placement of the plurality of sensors (e.g., cameras, etc.) can be based on a number and/or placement of one or more robotic manipulator 230 of the system and/or the plurality of engagement pads defined by the end effector 250. By way of example, the plurality of sensors can be positioned with respect to a robotic manipulator 230 or each of the engagement pads defined by an end effector 250 attached to the robotic manipulator 230 to provide a continuous feed of object data and/or environmental data for each handling zone within the handling environment to monitor, account for, and/or characterize the independent motion of each of the robotic manipulator 230 plurality of engagement pads of the end effector 250.

The robotic system 205 can include a controller communicatively coupled to the one or more image sensing component 260, the robotic manipulator 230, and/or each of the plurality of engagement units (e.g., engagement pads controlled by a corresponding actuation assembly) defined by the end effector 250. The controller can be configured to automatically control the robotic manipulator 230 and/or each of the plurality of engagement assembly of the exemplary end effector 250 (e.g., each of the plurality of actuation assemblies) based on the object data and/or environmental data captured by the one or more image sensing component 260. The controller, for example, can include one or more processors and/or memory devices. The memory devices can include computer-readable instructions for interpreting the object data and/or environmental data and initiating an operation of one or more of the plurality of actuation assemblies defined by an end effector 250 to cause a resultant movement of one or more engagement pads coupled with the actuation assembly based on the object data. The computer-readable instructions, for example, can implement one or more motion planning and/or trajectory generation functions for operating the plurality of engagement assemblies defined by an exemplary end effector 250.

In various embodiments, an exemplary end effector may comprise a frame element secured relative to a positioning mechanism of an exemplary robotic system and a plurality of independently controllable engagement assemblies connected to the frame element. In various embodiments, the frame element may be secured relative to a positioning mechanism of an exemplary robotic system (e.g., a robotic manipulator, a robotic arm, and/or the like) such that the end effector is coupled to the positioning mechanism and configured to be arranged within a handling environment based at least in part on the arrangement of the positioning mechanism. As described herein, the plurality of engagement assemblies of an exemplary end effector may define a plurality of engagement pads operably coupled to the frame element, each of the plurality of engagement pads being moveable in one or more directions relative to the frame element by a corresponding actuation assembly. Each of the corresponding actuation assemblies of the plurality of engagement assemblies may be independently operable to move one of the plurality of engagement pads connected thereto throughout a respective range of motion such that each of the plurality of engagement pads is configured to engage a respective portion of one or more objects disposed within the handling environment.

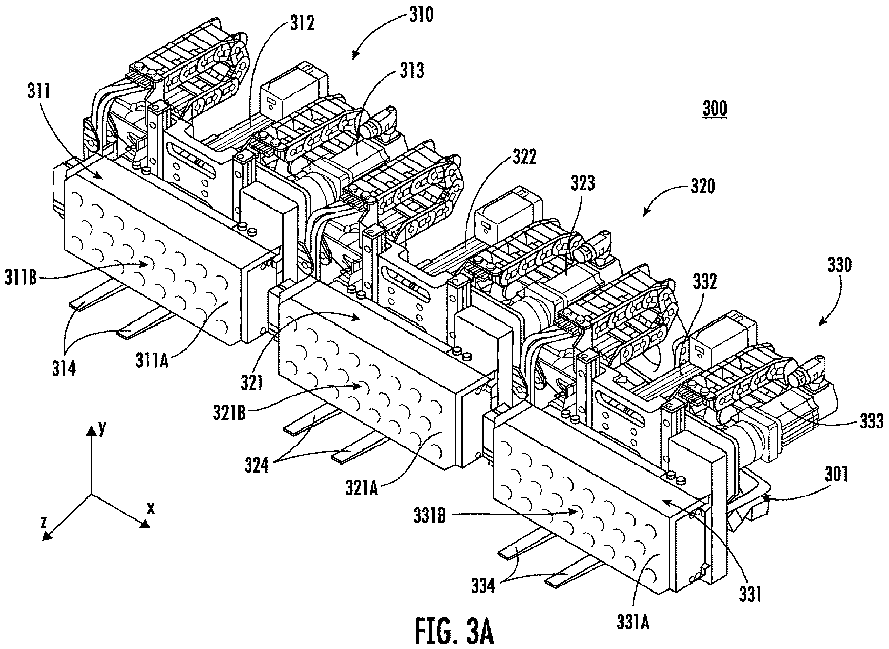

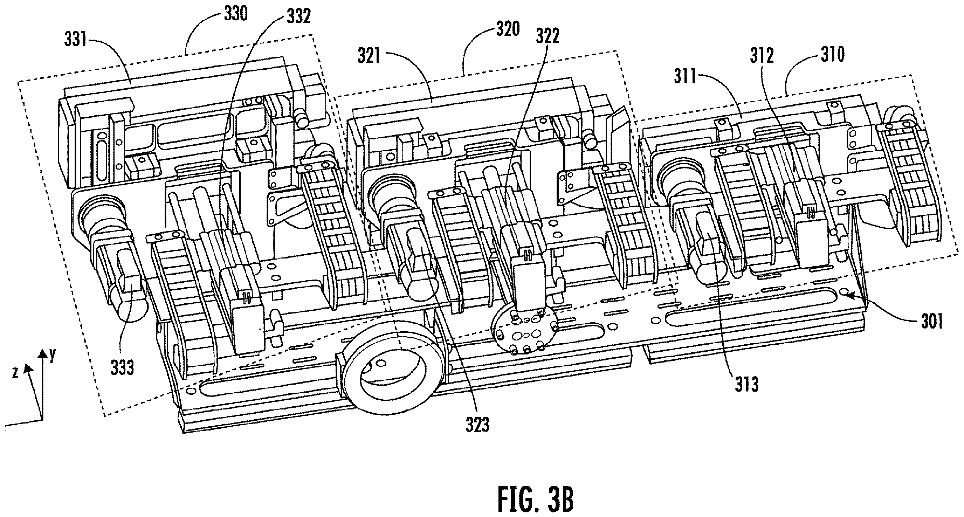

FIGS. 3A and 3B illustrate perspective views of an exemplary end effector according to various embodiments described herein. In particular, the exemplary end effector 300 illustrated in FIGS. 3A and 3B defines a selectively adjustable configuration configured for use in a robotic system for defining a plurality of distinct handling zones and handling one or more objects disposed therein. As illustrated, the exemplary end effector 300 comprises a frame element 301 and a plurality of independently operable engagement assemblies secured to the frame element. The plurality of engagement assemblies can include at least two engagement assemblies (e.g. engagement assemblies 310, 320, 330. The number of engagement assemblies of an exemplary end effector 300 can be reconfigurable. For instance, the number of engagement assemblies can be based on a handling environment size and/or shape (e.g., logistics container size and/or shape), an orientation of objects with the handling environment, and/or any other factor that can impact the throughput achievable by the end effector 300. In various embodiments, the plurality of engagement assemblies defined by an exemplary end effector 300 includes two or more engagement assemblies (e.g., three engagement assemblies). For example, as illustrated in the exemplary embodiment shown in FIGS. 3A and 3B, the plurality of engagement assemblies of the exemplary end effector 300 is defined by three independently controllable engagement assemblies, including a first engagement assembly 310, a second engagement assembly 320, and a third engagement assembly 330. In various embodiments, an exemplary end effector may comprise a plurality of engagement assemblies defined by any number of independently operable engagement assemblies, wherein the number of engagement assemblies being selectively determined based at least in part on an intended object size, a payload weight capacity of the robot system, an available work space dimension associated with the handling environment within which the end effector is configured to operate, and/or the like. In various embodiments, the frame element 301 of an exemplary end effector 301 may be secured relative to a positioning mechanism of an exemplary robotic system (e.g., a robotic manipulator, a robotic arm, and/or the like) such that the end effector 300 is coupled to the positioning mechanism and configured to be arranged within a handling environment based at least in part on the arrangement of the positioning mechanism. In various embodiments, the frame element 301 may comprise an at least substantially rigid material configured to facilitate a secure coupling of the end effector 300 relative to the positioning mechanism. Further, the frame element 301 may be configured to facilitate connections of each of the plurality of engagement assemblies 310, 320, 330 defined by the end effector 300 at respective portions of the frame element 301 such that at least a portion of each of the plurality of engagement assemblies 310, 320, 330 is rigidly secured relative to the respective portion of the frame element 301.

As illustrated in FIGS. 3A-3B, each of the plurality of engagement assemblies 310, 320, 330 of the end effector 300 may comprise an engagement pad 311, 321, 331 and a corresponding actuation assembly defined by one or more actuation elements connected to the respective engagement pad 311, 321, 331 and operable to move the engagement pad 311, 321, 331 connected thereto throughout a respective range of motion relative to the frame element 301. For example, as described herein, each of the plurality of actuation assemblies defined by the plurality of engagement assemblies 310, 320, 330 may be configured to move a respective one of the engagement pads 311, 321, 331 connected thereto in one or more directions relative to the frame element 301 such that an engagement surface 311A, 321A, 331A of the engagement pad 311, 321, 331 physically contacts at least a portion of one or more object disposed within a handling zone defined by the engagement pad 311, 321, 331. In various embodiments, at least a portion of each of the plurality of engagement pads 311, 321, 331, including at least a portion of each of the respective engagement surfaces 311A, 321A, 331A thereof, may be made of an at least partially compliable material, such as, for example, a foam material, a rubber material, a sponge material, and/or the like, or any other material having an at least partially compliable configuration capable of accommodating a complex subject surface to facilitate a robust connection of an object to an engagement pad 311, 321, 331 during operation of the end effector 300. As a non-limiting example provided for illustrative purposes, in various embodiments, an exemplary engagement pad may comprise a plurality of shore durometers of EPDM rubber foam. In various embodiments, the engagement surface 311A, 321A, 331A of each engagement pad may be defined by an outward-facing surface of the engagement pad 311, 321, 331 such that each engagement surface 311A, 321A, 331A faces in a respective direction away from the frame assembly 301 of the end effector 300. In one or more example embodiments, the one or more engagement surfaces 311A may be configured to physically engage, at least in part, with an object, wherein the engagement of the object and the one or more engagement surface 311A may be defined, at least in part, by securing at least a portion of the object against one or more engagement surfaces 311A.

In various embodiments, an exemplary engagement pad 311, 321, 331 of the end effector may further comprise one or more suction elements 311B, 321B, 331B distributed about the respective engagement surface 311A, 321A, 331A and configured to facilitate the retention of the object in a secured position against the engagement surface 311A, 321A, 331A while the engagement pad 311, 321, 331 is transporting the object throughout the handling environment. For example, the suction elements 311B, 321B, 331B may be selectively operated upon an engagement surface 311A, 321A, 331A physically contacting (e.g., and/or approaching) an object to generate suction in order to adhere to an object to the engagement surface 311A, 321A, 331A. In various embodiments, the one or more suction elements 311B, 321B, 331B may each be provided in an outward-facing configuration at a respective location of an engagement surface 311A, 321A, 331A. In various embodiments, the one or more suction elements 311B, 321B, 331B of each engagement pad 311, 321, 331 may be distributed about the respective engagement surface 311A, 321A, 331A in any configuration, such as, a symmetric configuration, a patterned configuration, an evenly distributed configuration a skewed-distribution configuration, a random configuration, and/or the like. Additionally, in various embodiments, each engagement pad 311, 321, 331 may comprise one or more pressure sensors, vacuum sensors, pressure gauges and/or the like to provide feedback to the controller of the robotic system and/or the end effector 300.

In various embodiments, the actuation assembly of each engagement assembly 310, 320, 330 of the end effector 300 may comprise one or more independently operable actuation elements, such as, for example, a first actuation element 312, 322, 323 and a second actuation element 313, 323, 333. For example, the first and second actuation elements of each actuation assembly may comprise electrically guided actuation elements configured to facilitate a precise control of the movement of a corresponding engagement pad along a respective axis. In various embodiments, the actuation assembly of each engagement assembly 310, 320, 330 may comprise a first actuation element 312, 322, 332 configurable between a retracted configuration and an extended configuration to facilitate movement of an engagement pad 311, 321, 331 along a first axis. Further, in various embodiments, the actuation assembly of each engagement assembly 310, 320, 330 may comprise a second actuation element 313, 323, 333 configurable between a retracted configuration and an extended configuration to facilitate movement of an engagement pad 311, 321, 331 along a second axis. In various embodiments, the movement of each engagement pad 311, 321, 331 controlled by the plurality of actuation assemblies is defined relative to the frame element 301. For example, as described herein, each of the first actuation elements 312, 322, 332 may be operable to move the respective engagement pads 311, 321, 331 along the first axis to the adjust the depth of the engagement pad 311, 321, 331 relative to the frame element 301. Further, each of the second actuation elements 313, 323, 333 may be operable to move the respective engagement pads 311, 321, 331 along the second axis to the adjust the height of the engagement pad 311, 321, 331 relative to the frame element 301.

In various embodiments, the first axis of movement defined by the actuation assembly (e.g., the first actuation element 312, 322, 332) of each engagement assembly 310, 320, 330 is at least substantially parallel to the corresponding first axes of movement defined by the other engagement assemblies of the end effector 300. Further, in various embodiments, the second axis of movement defined by the actuation assembly (e.g., the second actuation element 313, 323, 333) of each engagement assembly 310, 320, 330 is at least substantially parallel to the corresponding second axes of movement defined by the other engagement assemblies of the end effector 300. For example, in various embodiments, the second axis of movement for each individual engagement assembly 310, 320, 330 may be defined in a direction that is at least in partially orthogonal to the first axis of movement defined by the respective engagement assembly 310, 320, 330.

In one or more example embodiments, as depicted in FIG. 3B, the movement of the first engagement pad 311, the second engagement pad 321, and the third engagement pad 331 may be configured to translate independently of each other relative to the same frame element 301 of the end effector 300.

In various embodiments, as depicted in FIG. 3A, the end effector 300 may further comprise a plurality of support elements 314, 324, 334. In various embodiments, each individual engagement assembly 310, 320, 330 may comprise at least one corresponding support element 314, 324, 334, wherein the at least one corresponding support element 314, 324, 334 is disposed beneath a lowermost edge of the corresponding engagement pad 311, 321, 331. In various embodiments, the plurality of support elements 314, 324, 334 may be fixed to the frame assembly 301 of the end effector 301For example in various embodiments, a support element 314, 324, 334 may comprise a rigid material and may be configured to assist the corresponding engagement pad 311, 321, 331 with loading and unloading of objects within the corresponding handling zone.

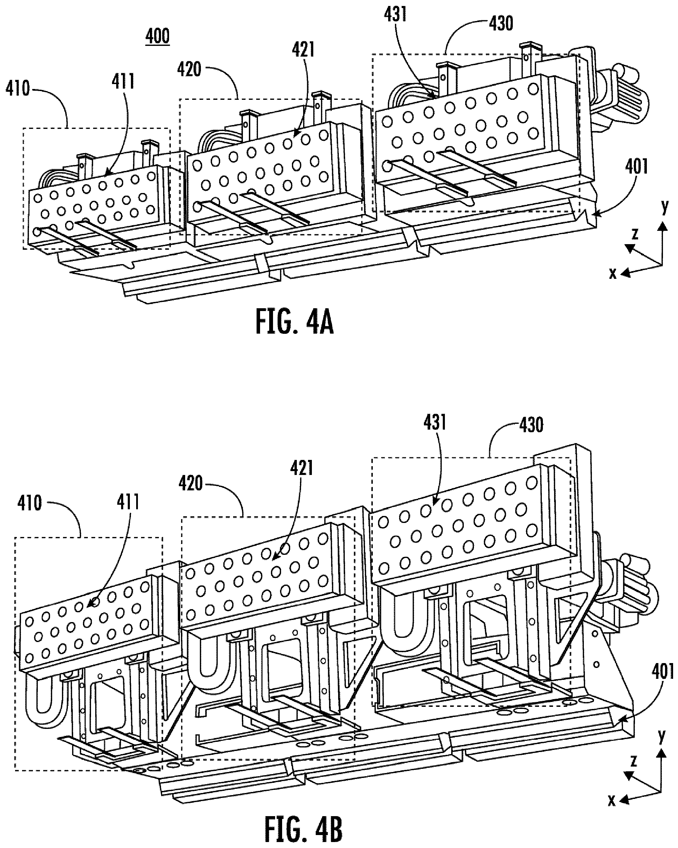

As described herein, an engagement assembly of an exemplary end effector may be configured such that the range of motion of an engagement pad relative to the frame element of the end effector is defined by the corresponding actuation assembly coupled thereto. In various embodiments, an actuation assembly may comprise a first actuation element connected to the engagement pad and configured to move between a retracted configuration and an extended configuration in order to cause the engagement pad to move along an axis defined in a first direction. For example, as illustrated in FIGS. 4A and 4B, each of the plurality of engagement pads 411, 421, 431 of an exemplary end effector 400 may be moveable through a respective first subrange of motion defined by the movement of each engagement pad 411, 421, 431 relative to the frame element 401 along a longitudinal axis defined in a height direction (e.g., in the y-direction, as defined in the exemplary orientation illustrated in FIGS. 4A ad 4B). In various embodiments, the actuation assembly of each of the plurality of engagement assemblies 410, 420, 430 may include a first actuation element connected to a respective engagement pad 411, 421, 431 that may be selectively configurable between a retracted configuration and an extended configuration in order to move the respective engagement pad 411, 421, 431 through the first subrange of motion (e.g., along a respective longitudinal axis defined in the y-direction, as illustrated in the exemplary orientation illustrated in FIGS. 4A and 4B), so as to adjust the height of the engagement pad 411, 421, 431 relative to the frame element 401.

As an illustrative example depicted by the exemplary end effector 400 shown in FIG. 4A, the exemplary end effector 400 is configured such that each of the engagement pads 411, 421, 431 thereof are provided in a lowermost position relative to the frame element 401 (e.g., as defined in the height direction). In various embodiments, the first actuation element of an exemplary engagement assembly 410, 420, 430 may be selectively reconfigured (e.g., by a controller of an exemplary robotic system in communication with the end effector) from a first configuration (e.g., a retracted configuration) to a second configuration (e.g., an extended configuration) so as to adjust the height of the respective engagement pad 411, 421, 431 connected thereto to an uppermost position relative the frame element 401 (e.g., as defined in the height direction). For example, the exemplary end effector 400 is shown in FIG. 4B in such an exemplary configuration, wherein each of the engagement pads 411, 421, 431, upon having been moved by a corresponding first actuation element in a first direction along a respective longitudinal axis defined in the height direction (e.g., in the positive y-direction, as defined in the exemplary orientation shown in FIGS. 4A and 4B) is provided in an uppermost position relative the frame element 401.

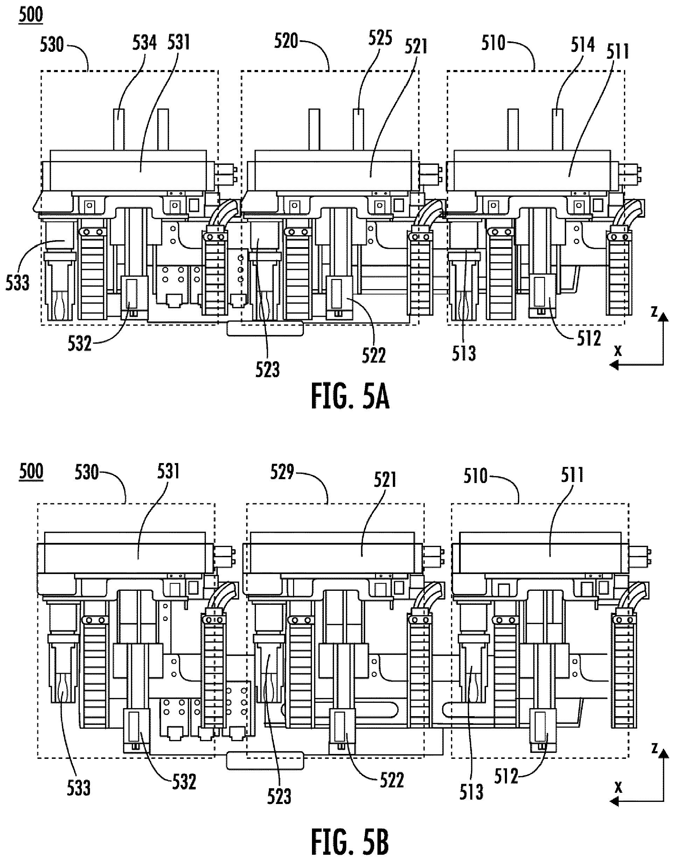

Further, in various embodiments, an independently operable engagement assembly of an exemplary end effector may comprise an actuation assembly having a second actuation element connected to the corresponding engagement pad of the engagement assembly. The second actuation element may be configured to move between a retracted configuration and an extended configuration in order to cause the engagement pad to move along a second axis defined in a second direction, the second direction being different than the first direction defined by the first axis along which the engagement pad may move during operation of the first actuation element. For example, as illustrated in FIGS. 5A and 5B, each of the plurality of engagement pads 511, 521, 531 of an exemplary end effector 500 may be moveable through a respective second subrange of motion defined by the movement of each engagement pad 511, 521, 531 relative to the frame element 501 along a lateral axis defined in a depth direction (e.g., in the z-direction, as defined in the exemplary orientation illustrated in FIGS. 5A ad 5B). In various embodiments, the actuation assembly of each of the plurality of engagement assemblies 510, 520, 530 may include both a first actuation element 512, 522, 532 and a second actuation element 513, 523, 533 connected to the engagement pad 511, 521, 531 of the corresponding engagement assembly 510, 520, 530 and individually operable to move the engagement pad 511, 521, 531 through a first subrange of motion and a second subrange of motion, respectively. For example, as illustrated, the second actuation element 513, 523, 533 of each engagement assembly 510, 520, 530 may be connected to a respective engagement pad 511, 521, 531 and may be selectively configurable between a retracted configuration and an extended configuration in order to move the respective engagement pad 511, 521, 531 through the second subrange of motion (e.g., along a respective lateral axis defined in the z-direction, as illustrated in the exemplary orientation illustrated in FIGS. 5A and 5B), so as to adjust the depth of the engagement pad 511, 521, 531 relative to the frame element (not shown) of the end effector 500.

As an illustrative example depicted by the exemplary end effector 400 shown in FIG. 5A, the exemplary end effector 500 is configured such that each of the engagement pads 511, 521, 531 thereof are provided in an innermost position relative to the frame element of the end effector 500 (e.g., as defined in the depth direction). In various embodiments, the second actuation element 513, 523, 533 of each engagement assembly 510, 520, 530 may be selectively reconfigured (e.g., by a controller of an exemplary robotic system in communication with the end effector) from a first configuration (e.g., a retracted configuration) to a second configuration (e.g., an extended configuration) so as to adjust the depth of the respective engagement pad 511, 521, 531 connected thereto to an outermost position relative the frame element (e.g., as defined in the depth direction). For example, the exemplary end effector 500 is shown in FIG. 5B in such an exemplary outermost configuration, wherein each of the engagement pads 511, 521, 531, upon having been moved by a corresponding second actuation element 513, 523, 533 in a second direction along a respective lateral axis defined in the second direction (e.g., in the positive z-direction, as defined in the exemplary orientation shown in FIGS. 5A and 5B) is provided in an outermost position relative to the frame element of the end effector 500.

In one or more embodiments, the one or more engagement pads may be configured to translate in the first direction and the second direction simultaneously. In one or more example embodiments, the movement of one or more engagement pad may be configured to translate in the first direction and the second direction based on, at least in part, one or more respective control signal to the respective actuation assembly, wherein one or more respective control signal may correspond to object data located within a respective zone. In one or more example embodiment, the first engagement pad, the second engagement pad, and/or the third engagement pad may be configured to translate in the respective first direction and the respective second direction independently of each other, wherein the first direction may be based on, at least in part, object data regarding height and the second direction may be based on, at least in part, object data regarding depth. In some embodiments, one or more engagement pads may be configured to start at a first position (e.g., initial position) in the first direction and the second direction simultaneously, wherein the first position in the first direction may be defined by the lowermost edge of the frame assembly and the first position of the second direction may be defined by the frame assembly. In one or more example embodiments, the one or more engagement pads, independently of each other, may be configured to translate to a second position (e.g., maximum threshold) in the first direction and the second direction simultaneously, wherein the second position in the first direction and the second direction may be defined by the maximum length of one or more actuator elements in the first direction and the second direction. Additionally or alternatively, the one or more engagement pad may be configured to translate to any other location between the first position and the second position in the first direction and the second direction simultaneously, wherein the one or more additional position may be based on object data corresponding height and depth on the object in the respective zones of the one or more engagement assemblies.

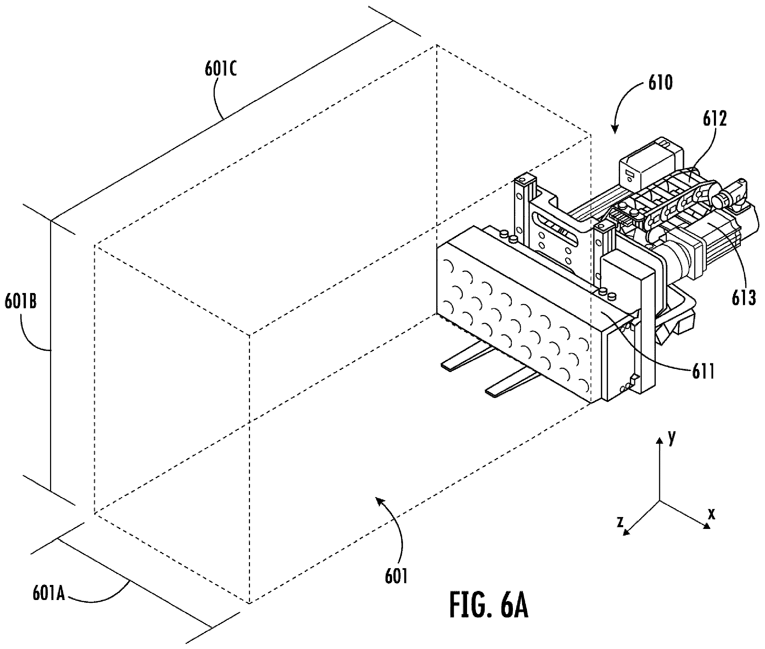

In various embodiments, as described herein, the plurality of independently moveable engagement pads of an exemplary end effector may define a plurality of distinct handling zones within a handling environment such that each of the plurality of engagement pads is configured to engage a respective portion of the one or more objects defined within a corresponding handling zone. For example, each handling zone defined by a corresponding one of the plurality of engagement pads may be defined at least in part by the respective range of motion of the corresponding engagement pad. For example, FIG. 6A illustrates an isolated perspective view of an engagement assembly of an exemplary end effector according to various embodiments described herein. In particular, FIG. 6A illustrates an isolated view of an engagement assembly 610 defined by an exemplary end effector and the corresponding handling zone 601 defined by the engagement pad 611 of the engagement assembly 610. As described herein, the engagement pad 611 may be translated according to one or more operations of the actuation assembly (e.g., the first actuation element 612 and/or the second actuation element 613) of engagement assembly 610 such that the engagement pad 611 is moved throughout a range of motion (e.g., defined by a first subrange of motion and a second subrange of motion) to facilitate engagement with an object that is positioned (e.g., at least partially positioned) within the handling zone 601 defined by the engagement pad 611. As described herein, an handling zone defined by an engagement pad 611 of an exemplary end effector may embody a portion of the handling environment in which the end effector is being operated that is accessible to the engagement pad 611 based at least in part on the adjustable arrangement of the engagement pad 611 in both a height direction (e.g., the y-direction, as defined in the orientation illustrated in FIG. 6A), and a depth direction (e.g., the z-direction, as defined in the orientation illustrated in FIG. 6A).

For example, as illustrated in FIG. 6A, an exemplary handling zone 601 defined by an engagement pad 611 of the plurality of engagement pads of an exemplary end effector may be defined, at least in part, by a zone width 601A, a zone height 601B, and a zone depth 601C. The zone width 601A of an exemplary handling zone 601 is defined in a width direction (e.g., in the x-direction, as defined in the exemplary orientation illustrated in FIG. 6A) that is at least substantially perpendicular to both the height direction and the depth direction. In various embodiments, the zone width 601A of the handling zone 601 may correspond at least in part to a pad width of the respective engagement pad 611 defining the handling zone 601. For example, in an exemplary configuration wherein the actuation assembly of the engagement assembly 610 defining the handling zone 601 is not configured to move the engagement pad 611 in the width direction, the pad width of the engagement pad 611 may define the zone width 601A of the handling zone 601.

In various embodiments, the zone height 601B an exemplary handling zone 601 is defined in a height direction (e.g., in the y-direction, as defined in the exemplary orientation illustrated in FIG. 6A) that is at least substantially perpendicular to both the depth direction and the width direction. In various embodiments, the zone height 601B of the handling zone 601 may be defined at least in part by a first subrange of motion of the engagement pad 611 defined along a first axis relative to the frame assembly of the exemplary end effector. As described herein in reference to the exemplary embodiment illustrated in FIGS. 4A and 4B, the translation of the engagement pad 611 along the first axis in the height direction (e.g., the y-direction, as defined in the orientation illustrated in FIG. 6A), as defined by the configuration of the first actuation assembly 612 between a retracted configuration and an extended configuration, may define the zone height 601B of the handling zone 601. For example, the zone height 601B of the handling zone 601 may be defined, at least in part, by the maximum extension of the first actuator element 612 along the first axis (e.g., the positive y-direction, as defined in the orientation of FIG. 6A) causing the engagement pad 611 to be provided in the uppermost position relative to the frame element (e.g., as illustrated in the exemplary embodiment shown in FIG. 4B).

In various embodiments, the zone depth 601C an exemplary handling zone 601 is defined in a depth direction (e.g., in the z-direction, as defined in the exemplary orientation illustrated in FIG. 6A) that is at least substantially perpendicular to both the height direction and the width direction. In various embodiments, the zone depth 601C of the handling zone 601 may be defined at least in part by a second subrange of motion of the engagement pad 611 defined along a second axis relative to the frame assembly of the exemplary end effector. As described herein in reference to the exemplary embodiment illustrated in FIGS. 5A and 5B, the translation of the engagement pad 611 along the second axis in the depth direction (e.g., the z-direction, as defined in the orientation illustrated in FIG. 6A), as defined by the configuration of the second actuation assembly 613 between a retracted configuration and an extended configuration, may define the zone depth 601C of the handling zone 601. For example, the zone depth 601C of the handling zone 601 may be defined, at least in part, by the maximum extension of the second actuator element 613 along the second axis (e.g., the positive z-direction, as defined in the orientation of FIG. 6A) causing the engagement pad 611 to be provided in the outermost position relative to the frame element (e.g., as illustrated in the exemplary embodiment shown in FIG. 5B).

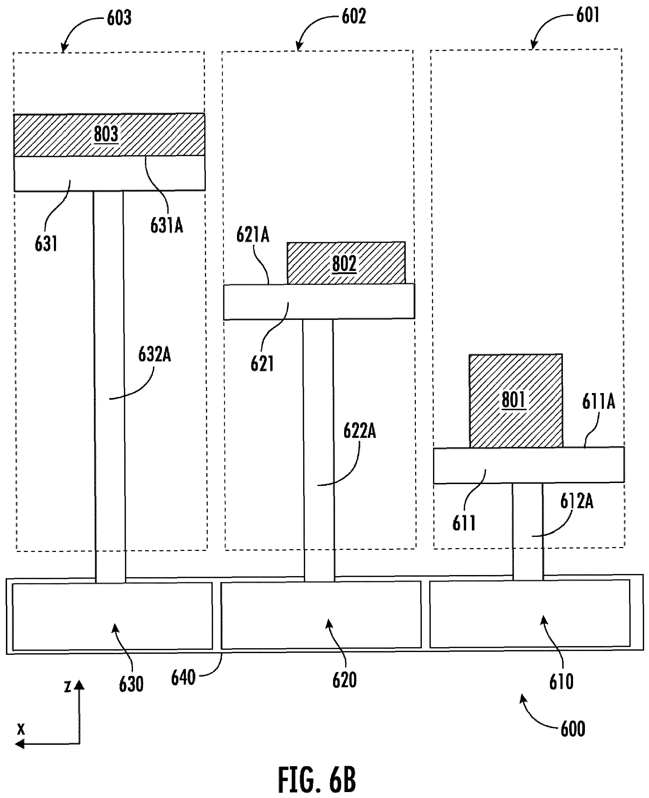

As described herein, each engagement assembly 610, 620, 630 of the exemplary end effector 600 can be mounted in position on the frame assembly 601 to load and/or unload objects in a respective handling zone 601, 602, 603 of a handling environment. Each robotic manipulator, for example, can be configured to operate in a handling zone 601, 602, 603 embodying a vertical slice of the handling environment (e.g., shipping container, loading facility, etc.) provided in front of the respective engagement pad 611, 621, 631. As illustrated, an exemplary adjustable end effector 600 comprising a plurality of independently operable engagement assemblies 610, 620, 630 may define a plurality of handling zones 601, 602, 603 within the handling environment, each handling zone 601, 602, 603 being defined by a respective engagement pad 611, 612, 613 of the plurality of engagement pads defined by the end effector 600. One or more objects present within the handling environment may be positioned such that at least a portion of the one or more objects is present within one or more of the handling zones 601, 602, 603 for pick-up/drop-off by one or more of the plurality of engagement pads 611, 612, 613 of the end effector. As an illustrative example, FIG. 6B illustrates a schematic depiction of a top view of a handling environment in which a plurality of objects are disposed within a plurality of handling zones defined by an exemplary end effector, in accordance with various embodiments described herein. In particular, FIG. 6B illustrates a plurality of objects, including a first object 801, a second object 802, and a third object 803, within a plurality of handling zones 601, 602, 603 defined by the plurality of engagement pads 611, 621, 631 of an exemplary end effector 600.

By way of example, the exemplary end effector 600 may include a first engagement assembly 610 comprising a first engagement pad 611 configured to operate in a first handling zone 601, a first engagement assembly 610 comprising a first engagement pad 611 configured to operate in a first handling zone 601, and a first engagement assembly 610 comprising a first engagement pad 611 configured to operate in a first handling zone 601. Three engagement assemblies and three handling zones are illustrated by FIGS. 6B-6D for exemplary purposes only. As described herein, the end effector 600 can include any number of engagement assemblies and is not limited to the number illustrated by FIGS. 6B-6D. Moreover, the handling environment can be divided into any number of handling zones defined by the corresponding plurality of engagement pads of the end effector 600 and is not limited the number illustrated by FIGS. 6B-6D.

Each engagement assembly 610, 620, 630 of the exemplary end effector 600 can independently handle objects within a respective handling zone 601, 602, 603. For instance, an engagement pad 611, 621, 631 can independently engage an object within a corresponding handling zone and may be operable to secure the object against an engagement surface 611A, 621A, 631A of the engagement pad 611, 621, 631 to facilitate transportation of the object to a secondary location (e.g., as the robotic arm to which the end effector 600 is coupled is moved throughout the handling environment). For example, as illustrated in FIGS. 6B-6D, each of the engagement pads 611, 621, 631 are configured for movement through a respective range of motion defining the corresponding handling zone 6-01, 602, 603 independent of the other engagement pads defined by the end effector 600. By operating each of the plurality of engagement assemblies 610, 620, 630 independently, the end effector 600 can allow each engagement pad 611, 621, 631 to independently approach a distinct portion of the one or more objects disposed within a handling environment, such as, for example, a respective object of a plurality of objects and/or respective portions of a single object that is disposed within the handling environment. This can allow an end effector 600 to make specific adjustments for a particular arrangement of one or more objects within the handling environment, thereby enabling a more bespoke and efficient handling operation to be executed by the end effector 600 during a loading and/or unloading of a logistics container. In this manner, an exemplary robotics system configured to utilize an adjustable end effector 600 having a plurality of engagement assemblies 610, 620, 630, as described herein, can allow for unloading of unstructured objects within a handling environment (e.g., a logistics container) and enable the loading of different loading arrangements and/or partial fills of the handling environment.

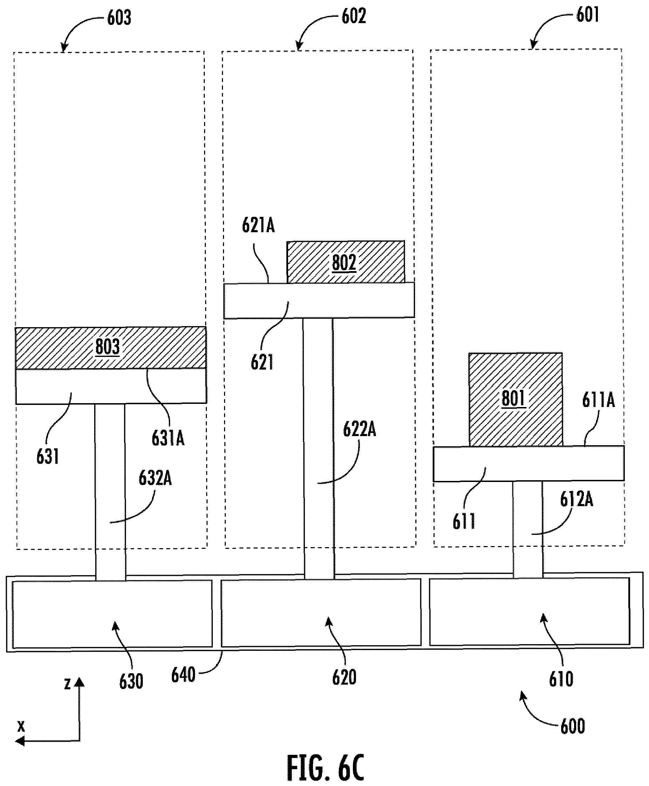

As illustrated in FIGS. 6B and 6C, for example, each of the plurality of engagement pads 611, 621, 631 may be translated through a first subrange of motion by an actuator arm 612A, 622A, and 632A of a respective first actuation element along respective first axes defined in the depth direction (e.g., in the z-direction as defined in the exemplary orientation illustrated in FIGS. 6B and 6C). In various embodiments, each of the plurality of engagement assemblies 610, 620, 630 may be selectively operated based on one or more control signals transmitted to the end effector 600 from a controller of the robotic system. In various embodiments, the control signals generated by the controller may be configured to cause the actuation assemblies of each of the respective engagement assemblies 610, 620, 630 to move the corresponding engagement pads 611, 621, 631 at least partially through the respective range of motion based on object data associated with an object that is at least partially disposed within a handling zone 601, 602, 603 defined by the engagement pad 611, 621, 631. For example, the object data may be generated by one or more image sensing components of an exemplary robotic system (e.g., such as, for example, the image sensing component 260 described in reference to FIG. 2, above). In various embodiments, the one or more image sensing component(s) may generate object data corresponding to a plurality of objects disposed within one or more of the handling zones 601, 602, 603 defined by the plurality of engagement pads 611, 621, 631. Example object data may be defined by one or more object characteristic of an object disposed within a handling zone, such as, for example, object position, object size, object shape, and/or the like. In various embodiments, the movement of an engagement pad within a corresponding handling zone may be controlled according to the object data associated with an object disposed (at least partially) within that handling zone. For example, an exemplary controller may transmit one or more control signals to the actuation assembly of each engagement assembly 610, 620, 630 to cause the actuation assemblies to be operated such that each of the engagement pads 611, 621, 631 are moved to a respective position in which the engagement pad 611, 621, 631 may engage an object arranged within the corresponding handling zone 601, 602, 603.

For example, as illustrated, the actuation assembly (e.g., the first actuation element) of the first engagement assembly 610 may be selectively operated to cause first engagement pad 611 to translate in the positive depth direction (e.g., in the z-direction as defined in the exemplary orientation illustrated in FIGS. 6B and 6C) to a position within the first handling zone 601 (e.g., along the zone depth of the first handling zone 601) such that the first engagement surface 611A of the first engagement pad 611 engages a first object 801 that is disposed within the first handling zone 601. Further, the actuation assembly (e.g., the first actuation element) of the second engagement assembly 620 may be selectively operated to cause second engagement pad 621 to translate in the positive depth direction to a position within the second handling zone 601 (e.g., along the zone depth of the second handling zone 602) such that the second engagement surface 621A of the second engagement pad 621 engages a second object 802 that is disposed within the second handling zone 602. Further still, as illustrated, the actuation assembly (e.g., the first actuation element) of the third engagement assembly 630 may be selectively operated to cause third engagement pad 631 to translate in the positive depth direction to a position within the third handling zone 603 (e.g., along the zone depth of the third handling zone 603) such that the third engagement surface 631A of the third engagement pad 631 engages a third object 803 disposed within the third handling zone 603. With further reference to FIGS. 6B-6C, in some embodiments, the independent operation of the plurality of engagement assemblies 610, 620, 630 may allow the plurality of engagement pads 611, 621, 631 to be translated along parallel axes in the depth direction (e.g., the z-direction, as defined in the orientation of FIGS. 6B-6C) to respective depths within the corresponding handling zones 601, 602, 603 such that the plurality of engagement pads are collectively arranged in a linear configuration (e.g., as illustrated in the exemplary embodiment shown in FIG. 6B) and/or in a non-linear configuration (e.g., as illustrated in the exemplary embodiment shown in FIG. 6C). The collective arrangement of the plurality of engagement pads 611, 621, 631 at a particular instance may depend, at least in part, on the arrangement of the one or more objects within each of the plurality of handling zones 601, 602, 603 at that instance.

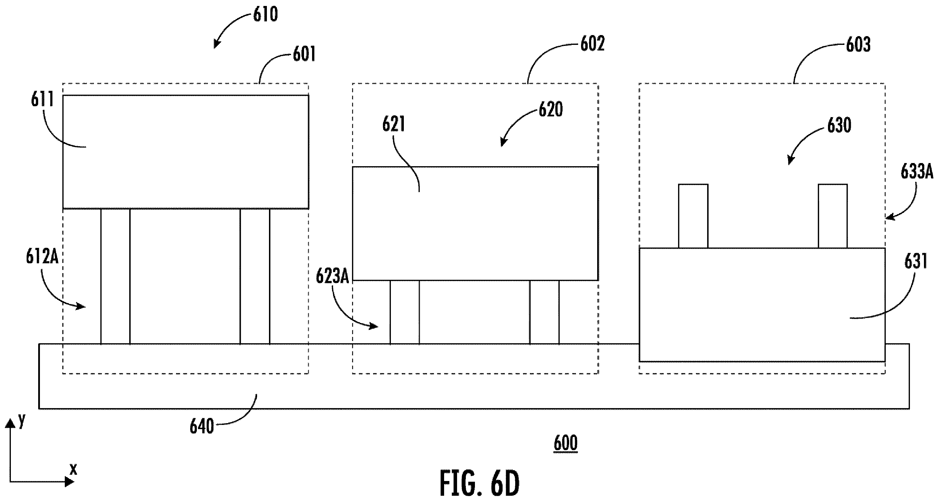

Further, as illustrated in FIG. 6D, each of the plurality of engagement pads 611, 621, 631 may be translated through a second subrange of motion by actuator arms 613A, 623A, and 633A of a respective second actuation element along respective second axes defined in the height direction (e.g., in the y-direction as defined in the exemplary orientation illustrated in FIG. 6D). For example, as illustrated, the actuation assembly (e.g., the second actuation element) of the first engagement assembly 610 may be selectively operated to cause first engagement pad 611 to translate in the positive height direction (e.g., in the y-direction as defined in the exemplary orientation illustrated in FIG. 6D) to a position within the first handling zone 601 (e.g., along the zone height of the first handling zone 601) such that the first engagement surface of the first engagement pad 611 engages a first object that is disposed within the first handling zone 601. Further, the actuation assembly (e.g., the second actuation element) of the second engagement assembly 620 may be selectively operated to cause the second engagement pad 621 to translate in the positive height direction to a position within the second handling zone 602 (e.g., along the zone height of the second handling zone 602) such that the second engagement surface of the second engagement pad 621 engages a second object that is disposed within the second handling zone 602. Further still, as illustrated, the actuation assembly (e.g., the second actuation element) of the third engagement assembly 630 may be selectively operated to cause the third engagement pad 631 to translate in the positive height direction to a position within the third handling zone 603 (e.g., along the zone height of the third handling zone 603) such that the third engagement surface of the third engagement pad 631 engages a third object that is disposed within the third handling zone 603. With further reference to FIG. 6D, in some embodiments, the independent operation of the plurality of engagement assemblies 610, 620, 630 may allow the plurality of engagement pads 611, 621, 631 to be translated along parallel axes in the height direction (e.g., the y-direction, as defined in the orientation of FIG. 6D) to respective height within the corresponding handling zones 601, 602, 603 such that the plurality of engagement pads are collectively arranged in a linear configuration (e.g., as illustrated in the exemplary embodiment shown in FIG. 6D) and/or in a non-linear configuration. As described above, the collective arrangement of the plurality of engagement pads 611, 621, 631 at a particular instance may depend, at least in part, on the arrangement of the one or more objects within each of the plurality of handling zones 601, 602, 603 at that instance.

In some embodiments, adjustable configuration of the exemplary end effector 600 corresponding to the independent operation of each of the plurality of engagement assemblies, as described herein, may facilitate an increased flexibility during operation of the end effector 600. For example, in various embodiments, the plurality of engagement pads may be independently controlled to engage a respective object within a corresponding handling zone defined by the engagement pad. Alternatively, and/or additionally, in various embodiments wherein a single object spans two or more of the plurality of handling zones defined by the plurality of engagement pads, the plurality of engagement pads may be independently controlled to engage respective portions of the object that are disposed within the corresponding handling zones defined by each engagement pad. The operation of the independently controllable engagement pads may be coordinated for collaboratively handling one or more objects disposed within the handling environment. For example, two or more of the plurality of engagement pads can at least substantially simultaneously engage respective portions of the same object to engage and transport the object within the handling environment in a manner that accommodates different object sizes, shapes, weights, configurations, and/or the like. In some embodiments, an exemplary end effector 600 may be configured to increase the operational efficiency of a robotic system.

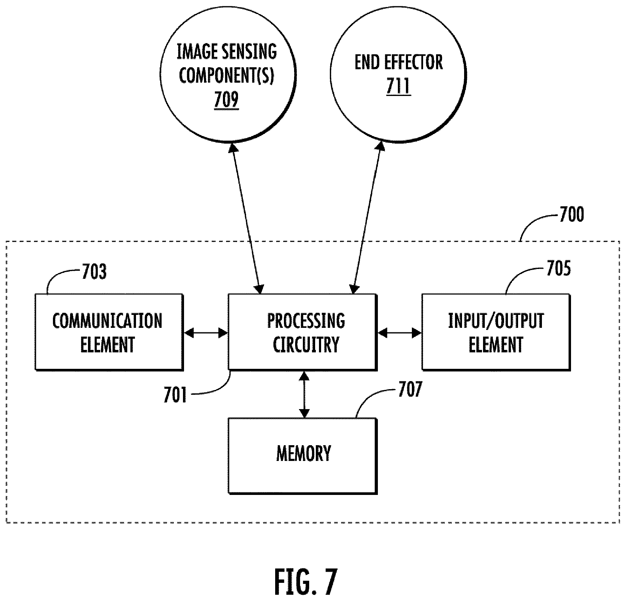

Referring now to FIG. 7, a schematic diagram depicting an example controller 700 of an example robotic system in electronic communication with various other components in accordance with various embodiments of the present disclosure is provided. As shown, the controller 700 comprises processing circuitry 701, a communication module 703, input/output module 705, a memory 707 and/or other components configured to perform various operations, procedures, functions or the like described herein.

In one example, the controller 700 of a robotic system, such as, for example, the robotic system 102 as described in reference to FIG. 1, may include an application processor, an image processor, or any other necessary components required for functioning of the robotic system and/or an exemplary adjustable end effector, as described herein. While FIG. 7 depicts a single controller 700, additional processors/controllers may be included. The controller 700 may include a microprocessor, pre-processors (such as an image pre-processor), graphics processors, a central processing unit (CPU), support circuits, digital signal processors, integrated circuits, memory, or any other types of devices suitable for running applications and for image processing and analysis. In some embodiments, the controller 700 may include any suitable type of single or multi-core processor, microcontroller, central processing unit, and/or the like. Any of the controllers disclosed herein may be configured to perform certain functions. Configuring a controller 700, such as any of the described processors, controllers or microprocessors, to perform certain functions may include programming of computer executable instructions and making those instructions available to the controller for execution during operation of the controller. In some embodiments, configuring a controller 700 may include programming the controller/device directly with architectural instructions. In other embodiments, configuring a controller 700 may include storing executable instructions on a memory that is accessible to the controller during operation. For example, the controller 700 may access the memory to obtain and execute the stored instructions during operation.

As shown, the controller 700 (such as the processing circuitry 701, communication module 703, input/output module 705 and memory 707) is electrically coupled to and/or in electronic communication with at least one an image sensing component 709 and an exemplary end effector 711. As depicted, each of the image sensing component 709 and the end effector 711 and the controller 700 of the sorting apparatus may exchange (e.g., transmit and receive) data with the processing circuitry 701 of the controller 700.

The processing circuitry 701 can be embodied as means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, but not limited to, an application specific integrated circuit (ASIC) or field programmable gate array (FPGA), or some combination thereof. Accordingly, although illustrated in FIG. 7 as a single processor, in an embodiment, the processing circuitry 701 can include a plurality of processors and signal processing modules. The plurality of processors can be embodied on a single electronic device or can be distributed across a plurality of electronic devices collectively configured to function as the circuitry of the robotic system 702. The plurality of processors can be in operative communication with each other and can be collectively configured to perform one or more functionalities of the circuitry of the robotic system as described herein. In an example embodiment, the processing circuitry 701 can be configured to execute instructions stored in the memory 707 or otherwise accessible to the processing circuitry 701. These instructions, when executed by the processing circuitry 701, can cause the circuitry of the robotic system 702 to perform one or more of the functionalities, as described herein.

In various embodiments, the image sensing component 709 may be similar to image sensing component 260 described above with regard to FIG. 2. For example, image sensing component 709 may obtain image data (e.g., color images and/or depth images) in relation to one or more objects present within a handling environment, which may be transmitted to the controller 700 (e.g., the processing circuitry 701) and used by the robotic system to generate object data associated with the one or more objects..

In some embodiments, an exemplary end effector 711 may be similar to the end effector 300 described above with regard to FIG. 3. For example, end effector 711 may receive a first control signal from the controller 700 (e.g., the processing circuitry 701) triggering activation (e.g., actuation) of the one or more engagement assemblies defined by the end effector 711. In some examples, triggering activation may comprise causing end effector 711 to independently control one or more of a plurality of engagement pads by moving the engagement pad within a corresponding handling zone and/or generating suction (e.g., via at least a portion of the plurality of suction elements disposed therein) in order to engage and secure an object at the respective engagement pad to facilitate transportation of the object from a first location (e.g., within the corresponding handling zone) to a second location. For example, end effector 711 may receive a second control signal from the processing circuitry 701 triggering deactivation of the one or more engagement assemblies, which may be defined by a repositioning of the engagement pad(s) (e.g., a retraction of the corresponding actuation element(s)) and/or a deactivation of at least a portion of the activated suction elements.

Whether configured by hardware, firmware/software methods, or by a combination thereof, the processing circuitry 701 can include an entity capable of performing operations according to embodiments of the present disclosure while configured accordingly. Thus, for example, when the processing circuitry 701 is embodied as an ASIC, FPGA or the like, the processing circuitry 701 can include specifically configured hardware for conducting one or more operations described herein. Additionally, or alternatively, when the processing circuitry 701 is embodied as an executor of instructions, such as can be stored in the memory 707, the instructions can specifically configure the processing circuitry 701 to perform one or more algorithms and operations described herein.

Thus, the processing circuitry 701 used herein can refer to a programmable microprocessor, microcomputer or multiple processor chip or chips that can be configured by software instructions (applications) to perform a variety of functions, including the functions of the various embodiments described above. In some devices, multiple processors can be provided dedicated to wireless communication functions and one processor dedicated to running other applications. Software applications can be stored in the internal memory before they are accessed and loaded into the processors. The processors can include internal memory sufficient to store the application software instructions. In many devices, the internal memory can be a volatile or nonvolatile memory, such as flash memory, or a combination thereof. The memory can also be located internal to another computing resource (e.g., enabling computer readable instructions to be downloaded over the Internet or another wired or wireless connection).

The memory 707 can include suitable logic, circuitry, and/or interfaces that are adapted to store a set of instructions that is executable by the processing circuitry 701 to perform predetermined operations. Additionally, or alternately, the memory 707 can be configured to store data/information, application programs, instructions, etc., so that the controller component 700 can execute various functions according to the embodiments of the present disclosure. For example, in at least some embodiments, the memory 707 is configured to cache input data for processing by the processing circuitry 701. Thus, in at least some embodiments, the memory 707 is configured to store program instructions for execution by the processing circuitry 701. The memory 707 can store information in the form of static and/or dynamic information. When the functions are executed, the stored information can be stored and/or used by the controller component 700. Example memory embodiments can include, but are not limited to, a hard disk, random access memory, cache memory, read only memory (ROM), erasable programmable read-only memory (EPROM) & electrically erasable programmable read-only memory (EEPROM), flash memory, magnetic cassettes, magnetic tape, magnetic disk storage or other magnetic storage devices, a compact disc read only memory (CD-ROM), digital versatile disc read only memory (DVD-ROM), an optical disc, circuitry configured to store information, or some combination thereof. In an example embodiment, the memory 707 can be integrated with the processing circuitry 701 on a single chip, without departing from the scope of the disclosure.

The communication element 703 can be implemented as any apparatus included in a circuit, hardware, a computer program product, or a combination thereof, which is configured to receive and/or transmit data from/to another component or apparatus. The computer program product comprises computer-readable program instructions stored on a computer-readable medium (for example, the memory 707) and executed by a processing component 700 (for example, the processing circuitry 701). In some embodiments, the communication element 703 (as with other components discussed herein) can be at least partially implemented as the processing circuitry 701 or otherwise controlled by the processing circuitry 701. In this regard, the communication element 703 can communicate with the processing circuitry 701, for example, through a bus. The communication element 703 can comprise, for example, antennas, transmitters, receivers, transceivers, network interface cards and/or supporting hardware and/or firmware/software and is used for establishing communication with another apparatus. The communication element 703 can be configured to receive and/or transmit any data that can be stored by the memory 707 by using any protocol that can be used for communication between apparatuses. The communication element 703 can additionally or alternatively communicate with the memory 707, the input/output element 705 and/or any other component of the processing component 700, for example, through a bus.

In some embodiments, the processing component 700 can comprise an input/output element 705. The input/output element 705 can communicate with the processing circuitry 701 to receive instructions input by the user and/or to provide audible, visual, mechanical, or other outputs to the user. Therefore, the input/output element 705 can comprise supporting devices, such as a keyboard, a mouse, a display, a touch screen display, and/or other input/output mechanisms. Alternatively, at least some aspects of the input/output element 705 can be implemented on a device used by the user to communicate with the processing component 700. The input/output element 705 can communicate with the memory 707, the communication element 703 and/or any other component, for example, through a bus. One or a plurality of input/output modules and/or other components can be included in the processing component 700.

Many modifications and other embodiments of the present disclosure set forth herein will come to mind to one skilled in the art to which these embodiments pertain having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions can be provided by alternative embodiments without departing from the scope of the appended claims. In this regard, for example, different combinations of elements and/or functions than those explicitly described above are also contemplated as can be set forth in some of the appended claims. Although specific terms are employed herein, they are used in a generic and descriptive sense only and not for purposes of limitation.

## Claims

1. An end effector configured for handling one or more objects within a handling environment, the end effector comprising:
a frame element secured relative to the positioning mechanism; and
a plurality of engagement pads operably coupled to the frame element, each of the plurality of engagement pads being moveable in one or more directions relative to the frame element by a corresponding actuation assembly;
wherein each of the corresponding actuation assemblies is independently operable to move one of the plurality of engagement pads connected thereto throughout a respective range of motion such that each of the plurality of engagement pads is configured to engage a respective portion of the one or more objects.

2. The end effector of claim 1, wherein each of the plurality of engagement pads is configured for movement in a first direction defined along a first axis and a second direction defined along a second axis, and wherein a first movement of a first engagement pad in the first direction defines a height adjustment and a second movement of the first engagement pad in the second direction defines a depth adjustment.

3. The end effector of claim 1, wherein one or more of the plurality of engagement pads comprises a vacuum pad defined by one or more suction elements positioned within the engagement pad.

4. The end effector of claim 1, wherein the plurality of engagement pads comprises a first engagement pad connected to a first actuation assembly, a second engagement pad connected to a second actuation assembly, and a third engagement pad connected to a third actuation assembly, the first engagement pad being independently moveable throughout a first range of motion by the first actuation assembly, the second engagement pad being independently moveable throughout a second range of motion by the second actuation assembly, and the third engagement pad being independently moveable throughout a third range of motion by the third actuation assembly, and wherein the first engagement pad defines a first individual zone.

5. The end effector of claim 1, wherein the end effector is operable to engage the one or more objects within a plurality of distinct handling zones, the plurality of handling zones being defined by the plurality of engagement pads such that each of the plurality of engagement pads is configured to engage a respective portion of the one or more objects defined within a corresponding handling zone, wherein each of the plurality of handling zones is defined at least in part by the respective range of motion of one of the plurality of engagement pads.

6. The end effector of claim 5, wherein each of the plurality of handling zones is defined by a respective zone width that corresponds to a pad width of the respective engagement pad defining the handling zone.

7. The end effector of claim 1, further comprising one or more support element configured to contact at least a portion of the one or more objects to support the one or more objects in an engaged position relative to the plurality of engagement pads, wherein the one or more support element is secured relative to the frame element in a position below at least a portion of the plurality of engagement pads.

8. The end effector of claim 7, wherein the one or more support elements comprises a plurality of support elements, each of the plurality of support elements being positioned relative to a respective one of the plurality of engagement pads.

9. The end effector of claim 1, wherein the plurality of engagement pads are distributed along a width of the end effector in a lateral arrangement such that each of the plurality of engagement pads is positioned at a respective position defined along the width.

10. The end effector of claim 1, wherein at least a portion of each of the plurality of engagement pads is made of a compliant material.

11. The end effector of claim 1, wherein each of the corresponding actuation assemblies comprises an electric guided actuator, and wherein each of the corresponding actuation assemblies comprises a first actuator element configured to move one or more of the plurality of engagement pads in a first direction relative to the frame assembly and a second actuator element configured to move one or more of the plurality of engagement pads in a first direction relative to the frame assembly.

12. The end effector of claim 1, wherein each of the corresponding actuation assemblies is communicatively connected with a controller such that each actuation assembly is independently operable based on one or more control signals received from the controller.

13. The end effector of claim 1, further comprising one or more lighting element configured to selectively illuminate at least a portion of the handling environment.

14. A robotic system for handling one or more objects within a handling environment, the robotic system comprising:
a positioning mechanism configured for movement relative to the one or more objects within the handling environment; and
an end effector operably coupled to the positioning mechanism and configured for engagement with the one or more objects, the end effector comprising:
a frame element secured relative to the positioning mechanism; and
a plurality of engagement pads operably coupled to the frame element, each of the plurality of engagement pads being moveable in one or more directions relative to the frame element by a corresponding actuation assembly;
wherein each of the corresponding actuation assemblies is independently operable to move one of the plurality of engagement pads connected thereto throughout a respective range of motion such that each of the plurality of engagement pads is configured to engage a respective portion of the one or more objects.

15. The system of claim 14, further comprising:
one or more image sensing component, the one or more image sensing component comprising one or more of image sensors operable to generate object data associated with the one or more objects provided within the handling environment, wherein the object data is indicative of one or more of an object position, an object size, and an object shape defined by at least a portion of the one or more objects; and
a controller communicatively coupled to each of the actuation assemblies and configured to control the plurality of engagement pads by independently moving one or more of the engagement pads to within the respective range of motion based on the object data.
